# EUROPÄISCHE PATENTSCHRIFT

(11) **EP 1 752 616 B1**
(45) Veröffentlichungstag und Bekanntmachung des Hinweises auf die Patenterteilung: **22.07.2020**
(21) Anmeldenummer: 06111793.3
(22) Anmeldetag: 28.03.2006
(51) Int. Cl.: F01K 21/04, F01K 23/10, F02C 3/34, F02C 3/30

(54) **Gasturbinenanlage**
Gas turbine plant
Installation de turbine à gaz

(30) Priorität: 31.03.2005 DE 102005015151
(43) Veröffentlichungstag der Anmeldung: 14.02.2007
(73) Patentinhaber: Ansaldo Energia IP UK Limited, London W1G 9DQ (GB)
(72) Erfinder: Griffin, Timothy, Ennetbaden, 5408 (CH); Guidati, Gianfranco, Zürich, 8048 (CH); Wettstein, Hans, Fislisbach, 5442 (CH); Toqan, Majed, Adliswil, 8134 (CH)
(74) Vertreter: Bernotti, Andrea

(56) Entgegenhaltungen:
- EP-A2- 0 887 530
- EP-A2- 1 484 102
- FR-A1- 2 825 935
- US-A- 4 271 664
- US-B1- 6 513 318

## Beschreibung

### Technisches Gebiet

Die vorliegende Erfindung betrifft eine Gasturbinenanlage, insbesondere in einem Kraftwerk zur Stromgewinnung, mit den Merkmalen des Oberbegriffs des unabhängigen Anspruchs.

### Stand der Technik

Aus der DE 102 97 365 ist eine derartige Gasturbinenanlage bekannt, die mit einer Turbogruppe und mit einer Abgasrückführeinrichtung ausgestattet ist. Die Turbogruppe umfasst eine Turbine, einen damit antriebsgekoppelten Verdichter und eine Brennkammer, die in einem Gaspfad angeordnet ist, der den Verdichter mit der Turbine verbindet. Die Abgasrückführeinrichtung führt im Betrieb der Gasturbinenanlage Verbrennungsabgas der Turbine von einem mit der Turbine verbundenen Abgaspfad über einen Rückführpfad zu einem mit dem Verdichter verbundenen Frischgaspfad. Die Rückführung von Verbrennungsabgasen reduziert den Sauerstoffgehalt in der Verbrennungszone und reduziert bei einer gegebenen Flammentemperatur die NOx-Bildung.

Aus der US 6513318 ist eine weitere Gasturbinenanlage bekannt, die ebenfalls mit einer Abgasrückführeinrichtung ausgestattet ist, und die so ausgelegt ist, dass unabhängig von der Flammentemperatur, an einem emissionstechnisch optimierten Arbeitspunkt operiert wird. Die Gasturbinenanlage umfasst einen Mixer, einen Kompressor, einen ersten Strömungspfad eines Rekuperators, eine Brenneranordnung, eine Gasturbine, einen zweiten Strömungspfad des Rekuperators und einen Bypass-Pfad zwischen der Turbine und des Mixers. Die Gasturbinenanlage umfasst ebenfalls ein Regelventil, welches im Bypass-Pfad eingebracht ist.

Aus der EP 0887530 ist ebenfalls eine Gasturbinenanlage bekannnt die einen Kompressor, eine Brenneranordnung, eine Gasturbine, eine Dampfturbine und eine Abgasrückführeinrichtung umfasst. Die Abgasrückführeinrichtung ist derart ausgestaltet, dass sie einen Teil der Verbrennungsabgase der Gasturbine zum Kompressor führt. Die Gasturbinenanlage umfasst ebenfalls ein Steuerventil, welches den Fluss der zurückgeführten Verbrennungsabgase steuert.

In der FR 2825935 ist eine weitere Gasturbinenanlage mit einer Abgasrückführeinrichtung beschrieben. Die Abgasrückführeinrichtung leitet einen Teil der Verbrennungsabgase zurück zum Kompressor und umfasst einen Kühler, um die Verbrennungsabgase der Gasturbine auf die Temperatur des Frischgases abzukühlen.

Auch aus der US 4271664 ist eine Gasturbinenanlage mit Abgasrückführung bekannt.

Aus der WO 03/029618 ist eine andere Gasturbinenanlage bekannt, die im Normalbetrieb mit einem geschlossenen Arbeitsgaskreis arbeitet. Das bedeutet, dass die Verbrennungsabgase der Turbine dem Verdichter erneut zugeführt werden, ohne dass diesem Arbeitsgaskreis neues Frischgas hinzugefügt werden muss oder Verbrennungsabgas nach außen abgegeben wird. Auf diese 2Weise arbeitet diese Gasturbinenanlage im Normalbetrieb quasi emissionsfrei. Zum Anfahren dieser Gasturbinenanlage ist sie zusätzlich mit einem Frischgaspfad ausgestattet, über den Frischgas dem Verdichter zugeführt werden kann. Des weiteren ist ein Abgaspfad vorgesehen, über den die Verbrennungsabgase während des Startbetriebs abgeführt werden können.

### Darstellung der Erfindung

Hier setzt die vorliegende Erfindung an. Die Erfindung, wie sie in den Ansprüchen gekennzeichnet ist, beschäftigt sich mit dem Problem, für eine Gasturbinenanlage der eingangs genannten Art eine verbesserte Ausführungsform anzugeben, die sich insbesondere durch einen erhöhten Wirkungsgrad der Gasturbinenanlage auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Temperatur eines dem Verdichter zugeführten Frischgas-Abgas-Gemischs mit Hilfe des rückgeführten Verbrennungsabgases auf eine vorbestimmte Soll-Temperatur einzuregeln. Im Hinblick auf die Stromgewinnung müssen die rotierenden Komponenten einer Gasturbinenanlage, das sind insbesondere die Rotoren der Turbine, des Verdichters und eines Generators, mit möglichst konstanter Drehzahl drehen, um die Anforderungen eines stabilen Stromnetzes mit konstanter Wechselstromfrequenz einhalten zu können. Herkömmliche Verdichter einer herkömmlichen Gasturbinenanlage sind dazu ausgelegt, in einem relativ breiten Bereich von Umgebungstemperaturen ordnungsgemäß arbeiten zu können. Üblicherweise wird hier eine Bandbreite für Umgebungstemperaturen von - 20° C bis +50° C berücksichtigt. Dementsprechend ist ein herkömmlicher Verdichter so ausgelegt, dass er einen entsprechend großen Pumpgrenzenabstand aufweist. Durch das erfindungsgemäß vorgeschlagene Einregeln der Gemischtemperatur am Eintritt des Verdichters auf einen vorbestimmten Temperaturwert kann die Bandbreite der auftretenden Temperaturschwankungen deutlich reduziert werden, beispielsweise von 70 K auf 10 K. Dementsprechend kann der Verdichter so ausgelegt werden, dass er einen deutlich kleineren Pumpgrenzenabstand aufweist. Beispielsweise kann der Pumpgrenzenabstand um 5% reduziert werden. Dies führt zu einer Erhöhung des Wirkungsgrads des Verdichters, beispielsweise um 1,5%, wozu mehr Leistung zum Antreiben des Generators zur Verfügung steht bzw. der Brennstoffverbrauch der Gasturbinenanlage entsprechend gesenkt werden kann. Des weiteren kann der Verdichter möglicherweise auch mit einer reduzierten Verdichterstufenzahl auskommen, wodurch sich die Herstellungskosten für den Verdichter entsprechend reduzieren lassen. Mit Hilfe der Erfindung lässt sich somit der Wirkungsgrad der Gasturbinenanlage steigern, wobei hierzu auf eine ohnehin vorhandene Abgasrückführeinrichtung zugegriffen wird, um mit Hilfe der Abgasrückführung gezielt die Einlasstemperatur des Verdichters zu regeln.

Entsprechend der Erfindung ist in einem Rückführpfad, der die rückgeführten Abgase von einem Abgaspfad zu einem Frischluftpfad führt, ein Rückführkühler zum Kühlen der rückgeführten Verbrennungsabgase angeordnet sein. Dieser Rückführkühler ist hinsichtlich seine Kühlleistung steuerbar und ist hierzu mit einer Steuereinrichtung der Gasturbinenanlage gekoppelt. Durch die Kühlung der rückgeführten Abgase kann deren Temperatur vorgegeben werden. Über die Temperatur der rückgeführten Abgase lässt sich dann die Temperatur des Frischgas-Abgas-Gemischs einstellen.

Zusätzlich ist im Rückführpfad ein Rückführventil angeordnet, mit dessen Hilfe der Volumenstrom der rückgeführten Verbrennungsabgase gesteuert werden kann, wobei dieses Rückführventil dementsprechend mit der Steuereinrichtung gekoppelt ist. Sofern die rückgeführten Verbrennungsabgase eine andere Temperatur aufweisen als das Frischgas, lässt sich auch über den Volumenstrom, also über die Rückführrate der rückgeführten Abgase gezielt die Temperatur im Frischgas-Abgas-Gemisch einstellen.

Vorzugsweise berücksichtigt die Steuereinrichtung beim Einregeln der Temperatur des Frischgas-Abgas-Gemischs sowohl den Volumenstrom als auch die Temperatur der rückgeführten Abgase. Auf diese Weise können zum einen vom jeweiligen Betriebszustand der Gasturbinenanlage abhängige Veränderungen in der Rückführrate durchgeführt werden, wobei gleichzeitig über eine entsprechende Anpassung der Kühlleistung des Rückführkühlers die Temperatur am Eintritt des Verdichters im wesentlichen konstant gehalten werden kann.

Weitere wichtige Merkmale und Vorteile der erfindungsgemäßen Gasturbinenanlage ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen. Es zeigen, jeweils schematisch
- Fig. 1: eine stark vereinfachte, schaltplanartige Prinzipdarstellung einer Gasturbinenanlage nach der Erfindung,
- Fig. 2: eine Darstellung wie in Fig. 1, jedoch bei einer anderen Ausführungsform.

### Wege zur Ausführung der Erfindung

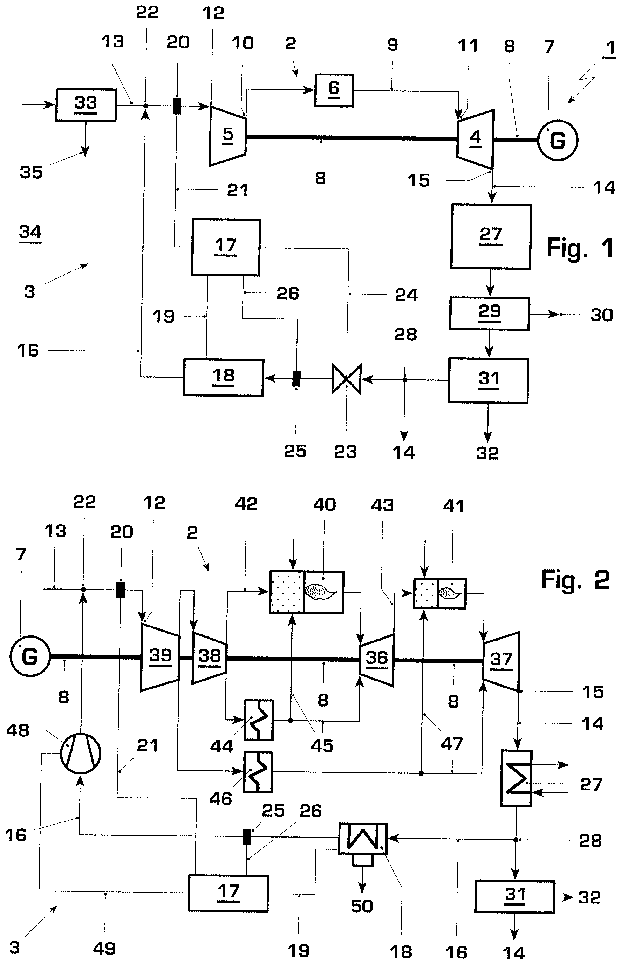

Entsprechend Fig. 1 umfasst eine erfindungsgemäße Gasturbinenanlage 1 zumindest eine Turbogruppe 2 sowie wenigstens eine Abgasrückführeinrichtung 3. Die Turbogruppe 2 umfasst wenigstens eine Turbine 4, zumindest einen Verdichter 5 und wenigstens eine Brennkammer 6. Des Weiteren ist üblicherweise zumindest ein Generator 7 vorgesehen. Turbine 4, Verdichter 5 und Generator 7 sind antriebsgekoppelt, was hier durch eine gemeinsame Welle 8 angedeutet ist. Die Brennkammer 6 ist in einem Gaspfad 9 angeordnet, der einen Auslass 10 des Verdichters 5 mit einem Einlass 11 der Turbine 4 verbindet. Ein Einlass 12 des Verdichters 5 wird über einen Frischgaspfad 13 mit Frischgas versorgt. Des Weiteren ist ein Abgaspfad 14 vorgesehen, der mit einem Auslass 15 der Turbine 4 verbunden ist und Verbrennungsabgase von der Turbine 4 abführt.

Die Gasturbinenanlage 1 ist zweckmäßig Bestandteil einer im übrigen nicht gezeigten Kraftwerksanlage und dient dort zur Stromgewinnung.

Die Abgasrückführeinrichtung 3 weist einen Rückführpfad 16 auf, der eingangsseitig an den Abgaspfad 14 und ausgangsseitig an den Frischgaspfad 13 angeschlossen ist. Dementsprechend können mit Hilfe der Abgasrückführeinrichtung 3 Verbrennungsabgase vom Abgaspfad 14 zum Frischgaspfad 13 rückgeführt werden. Die Vorteile einer intensiven Abgasrückführung während des Betriebs der Gasturbinenanlage 1 sind in der weiter oben bereits genannten DE 102 97 365 näher erläutert, deren Inhalt hiermit durch ausdrückliche Bezugnahme zum Offenbarungsgehalt der vorliegenden Erfindung hinzugefügt wird.

Des weiteren ist die Gasturbinenanlage 1 mit einer Steuereinrichtung 17 ausgestattet, die so ausgestaltet ist, dass sie einen Volumenstrom und/oder eine Temperatur der rückgeführten Verbrennungsabgase regeln kann, und zwar so, dass sich für ein Frischgas-Abgas-Gemisch, das in den Verdichter 5 eintritt, eine vorbestimmte Soll-Temperatur einstellt. Beispielsweise kann die Soll-Temperatur mit Hilfe der Steuereinrichtung 17 auf +/- 5 K genau eingeregelt werden. Dementsprechend kann die Gemischtemperatur am Einlass 12 des Verdichters 5 nur noch in einem Bereich von etwa 10 K schwanken. Dies führt dazu, dass es grundsätzlich möglich ist, den Verdichter 5 näher an seiner Pumpgrenze zu betreiben, was die Effizienz der Gasturbinenanlage 1 steigert. Des weiteren ist es für die Realisierung einer neuen Gasturbinenanlage 1 möglich, den Verdichter 5 entsprechend auszulegen, so dass er im Nennbetriebspunkt einen reduzierten Pumpgrenzenabstand aufweist, was den Wirkungsgrad des Verdichters 5 und somit die Effizienz der Gasturbinenanlage 1 zusätzlich steigert.

Um mit Hilfe der rückgeführten Abgase die Gemischtemperatur in der gewünschten Weise einregeln zu können, ist die Abgasrückführeinrichtung 3 mit einem Rückführkühler 18 ausgestattet, der im Rückführpfad 16 angeordnet ist. Der Rückführkühler 18 dient zum Kühlen der rückgeführten Verbrennungsabgase und ist hinsichtlich seiner Kühlleistung steuerbar. Zu diesem Zweck ist der Rückführkühler 18 auf geeignete Weise mit der Steuereinrichtung 17 gekoppelt, beispielsweise über eine Steuerleitung 19. Des weiteren kann ein Temperatursensor 20 vorgesehen sein, der über eine entsprechende Signalleitung 21 mit der Steuereinrichtung 17 gekoppelt ist. Bei der hier gezeigten Ausführungsform ist dieser Temperatursensor 20 so angeordnet, dass damit die Gemischtemperatur ermittelt werden kann. Im vorliegenden Fall ist dieser Temperatursensor 20 somit im Frischgaspfad 13 stromab einer Einleitstelle 22 angeordnet. An dieser Einleitstelle 22 mündet der Rückführpfad 16 in den Frischgaspfad 13 ein. Zur Verbesserung des Regelvorgangs könnte auch im Rückführpfad 16 ein weiterer Temperatursensor stromab des Rückführkühlers 18 angeordnet sein.

Zusätzlich ist die Abgasrückführeinrichtung 3 mit einem Rückführventil 23 ausgestattet sein, das so ausgestaltet ist, dass damit ein Volumenstrom der rückgeführten Verbrennungsabgase, also eine Rückführrate einstellbar ist. Zu diesem Zweck ist das Rückführventil 23 im Rückführpfad 16 angeordnet und ist auf eine entsprechende Weise mit der Steuereinrichtung 17 gekoppelt, beispielsweise über eine Steuerleitung 24. Zusätzlich kann ein Strömungssensor 25 vorgesehen sein, der auf geeignete Weise mit der Steuereinrichtung 17, zum Beispiel über eine Signalleitung 26 gekoppelt ist. Der Strömungssensor 25 ist so ausgestaltet, dass damit der in der Rückführleitung 16 strömende Volumenstrom der Verbrennungsabgase ermittelt werden kann. Hierzu ist der Strömungssensor 25 im Rückführpfad 16 angeordnet, beispielsweise stromab des Rückführventils 23. Im gezeigten Ausführungsbeispiel ist das Rückführventil 23 stromauf des Rückführkühlers 18 angeordnet. Ebenso ist es möglich, das Rückführventil 23 stromab des Rückführkühlers 18 anzuordnen. Der Strömungssensor 25 ist hier stromauf des Rückführkühlers 18 angeordnet; könnte jedoch ebenso stromab des Rückführkühlers 18 angeordnet sein.

Bei der hier gezeigten Ausführungsform ist die Gasturbinenanlage 1 zusätzlich mit einem Dampferzeuger 27 zur Wärmerückgewinnung ausgestattet, der im Abgaspfad 14 angeordnet ist. Dabei ist eine Abzweigstelle 28, an welcher der Rückführpfad 16 vom Abgaspfad 14 abzweigt, stromab dieses Dampferzeugers 27 angeordnet. Des Weiteren kann optional stromab des Dampferzeugers 27 ein Abgaskühler 29 im Abgaspfad 14 angeordnet sein. Dieser Abgaskühler 29 kann beispielsweise dazu dienen, die Abgase zu entfeuchten, indem er die Verbrennungsabgase unter den Taupunkt von Wasser abkühlt, wodurch dieses auskondensiert und entsprechend einem Pfeil 30 abgeführt werden kann. Zweckmäßig enthält der Abgaspfad 14 optional eine Kohlendioxyd-Trenneinrichtung 31, die es ermöglicht, dem Verbrennungsabgas Kohlendioxyd zu entziehen. Das dem Abgas entzogene CO₂ kann entsprechend einem Pfeil 32 abgeführt werden. Bei der Ausführungsform gemäß Fig. 1 ist die Abzweigstelle 28 stromab der CO₂-Trenneinrichtung 31 angeordnet. Die CO₂-Trenneinrichtung 31 ist dabei stromab des Dampferzeugers 27 sowie stromab des gegebenenfalls vorhandenen Abgaskühlers 29 angeordnet.

Die in Fig. 1 gezeigte Ausführungsform enthält im Frischgaspfad 13 eine Einrichtung 33 zum Anreichern des Sauerstoffgehalts im Frischgas. Beim Frischgas handelt es sich üblicherweise um Luft, die aus der Umgebung 34 der Gasturbinenanlage 1 angesaugt wird. Der Sauerstoffgehalt in Luft kann beispielsweise dadurch angehoben werden, dass der Luft Stickstoff entzogen wird und entsprechend einem Pfeil 35 abgeführt wird. Dies kann beispielsweise mit Hilfe einer für Sauerstoff durchlässigen und für Stickstoff undurchlässigen Membran realisiert werden; ebenso sind andere Verfahren zur Anreicherung des Sauerstoffgehalts im Frischgas denkbar. Je größer der Sauerstoffanteil im Frischgas, desto mehr Abgase können rückgeführt werden, das heißt um so größer kann die Rückführrate eingestellt werden.

Um die gewünschte Soll-Temperatur im Frischgas-Abgas-Gemisch am Einlass 12 des Verdichters 5 einstellen zu können, vergleicht die Steuereinrichtung 17 die im Gemisch herrschende Ist-Temperatur mit der gewünschten Soll-Temperatur. In Abhängigkeit dieses Soll-Ist-Vergleichs kann die Steuereinrichtung 17 den Rückführkühler 18 zum Erhöhen oder zum Absenken der Kühlleistung ansteuern. Zusätzlich oder alternativ kann die Steuereinrichtung 17 das Rückführventil 23 zum Erhöhen oder Absenken der Rückführrate ansteuern. Dabei ist es durchaus möglich, dass bei bestimmten Betriebszuständen der Gasturbinenanlage 1 eine bestimmte Rückführrate eingestellt werden muss, was beispielsweise über den Strömungssensor 25 realisierbar ist. Die Temperaturregelung im Gemisch erfolgt dann vorwiegend über die Leistungssteuerung des Rückführkühlers 18.

Der Rückführkühler 18 kann grundsätzlich so ausgestaltet sein, dass mit seiner Hilfe das rückgeführte Verbrennungsabgas so weit abgekühlt werden kann, dass seine Temperatur unterhalb einer Umgebungstemperatur der Gasturbinenanlage 1 liegt. Auf diese Weise kann zum Beispiel eine Entfeuchtung der rückgeführten Abgase unterstützt werden. Darüber hinaus ist es grundsätzlich möglich, stromab des Rückführkühlers 18 eine entsprechende Entfeuchtungseinrichtung (hier nicht gezeigt) in den Rückführpfad 16 einzubinden.

Darüber hinaus ist es grundsätzlich möglich, den Rückführkühler 18 als Wasser-Sprüh-Kühler auszugestalten. Bei einem derartigen Rückführkühler 18 wird das rückgeführte Verbrennungsabgas dadurch gekühlt, dass Wasser in das Verbrennungsabgas eingesprüht wird. Neben dem Kühleffekt ergibt sich dadurch gleichzeitig eine Massensteigerung im Verbrennungsabgas, was den Massenstrom zum Verdichter 5 und somit die Leistung der Turbogruppe 2 erhöht. Zusätzlich oder alternativ kann der Verdichter 5 mit einer hier nicht gezeigten Vernebelungseinrichtung ausgestattet sein, die es ermöglicht, Wassertröpfchen in das Frischgas-Abgas-Gemisch einzudüsen. Auch diese Wasserzugabe in das Gemisch dient zur Massenerhöhung im Arbeitsgas und zur Leistungssteigerung der Turbogruppe 2.

Die Auslegung der Abgasrückführeinrichtung 3 erfolgt zweckmäßig so, dass sich im Betrieb der Gasturbinenanlage 1 kein oder im wesentlichen kein Druckanstieg im Abgaspfad 14 stromab des Dampferzeugers 27 ausbilden kann. Dies lässt sich beispielsweise dadurch bewirken, dass im Bereich der Einleitstelle 22 ein Druck eingestellt wird, der kleiner ist als der Umgebungsdruck.

Die Entfernung von CO₂ aus den Abgasen der Gasturbinenanlage 1 ist im Hinblick auf den damit verbundenen Treibhauseffekt von erhöhter Bedeutung. Ein Verfahren zum Entfernen von CO₂ aus dem Abgas einer Gasturbine ist der EP 1 484 102 entnehmbar, deren Inhalt hiermit durch ausdrückliche Bezugnahme zum Offenbarungsgehalt der vorliegenden Erfindung hinzugefügt wird. Die Abgasrückführung erhöht die CO₂-Konzentration in der Verbrennungszone und führt zu einer erhöhten CO₂-Konzentration im Abgas. Dies ist von Vorteil, da die CO₂-Trennreinrichtung 31 bei erhöhter CO₂-Konzentration effektiver arbeiten kann. Eine weitere Verbesserung der Effektivität der CO₂-Trenneinrichtung 31 ergibt sich dann, wenn die Abzweigstelle 28 stromauf der CO₂-Trenneinrichtung 31 angeordnet ist, was beispielsweise bei der Ausführungsform gemäß Fig. 2 realisiert ist.

Fig. 2 zeigt eine Ausführungsform der erfindungsgemäßen Gasturbinenanlage 1, die mit sequentieller Verbrennung arbeitet. Hierzu umfasst die Turbogruppe 2 eine Hochdruckturbine 36, eine Niederdruckturbine 37, einen Hochdruckverdichter 38, einen Niederdruckverdichter 39, eine Hochdruckbrennkammer 40 und eine Niederdruckbrennkammer 41. Eine Gasturbinenanlage 1 mit sequentieller Verbrennung ist grundsätzlich aus der DE 103 60 951 bekannt, deren Inhalt hiermit durch ausdrückliche Bezugnahme zum Offenbarungsgehalt der vorliegenden Erfindung hinzugefügt wird.

Der Frischgaspfad 13 ist dabei an den Einlass 12 des Niederdruckverdichters 39 angeschlossen. Dieser Niederdruckverdichter 39 ist ausgangsseitig an die Eingangsseite des Hochdruckverdichters 38 angeschlossen, der ausgangsseitig über einen ersten Gaspfad 42, in dem die Hochdruckbrennkammer 40 angeordnet ist, an die Eingangsseite der Hochdruckturbine 36 angeschlossen ist.

Die Hochdruckturbine 36 ist ausgangsseitig über einen zweiten Gaspfad 43, in dem die Niederdruckbrennkammer 41 angeordnet ist, an eine Eingangsseite der Niederdruckturbine 37 angeschlossen. Der Abgaspfad 14 ist an den Auslass 15 der Niederdruckturbine 37 angeschlossen. Dem Hochdruckverdichter 38 kann ausgangsseitig komprimiertes Gas entnommen und einem ersten Kühler 44 zugeführt werden. Hierdurch kann Hochdruckkühlgas gewonnen werden, das in einem ersten Kühlgaspfad 45 zum Kühlen der Hochdruckbrennkammer 40 und der Hochdruckturbine 36 genutzt werden kann. In entsprechender Weise kann an der Druckseite des Niederdruckverdichters 39 komprimiertes Gas entnommen werden, das in einem zweiten Kühler 46 gekühlt wird. Hierdurch lässt sich Niederdruckkühlgas gewinnen, das über einen zweiten Kühlgaspfad 47 der Niederdruckturbine 37 und der Niederdruckbrennkammer 41 zugeführt werden kann.

Bei der Ausführungsform gemäß Fig. 2 funktioniert die Temperaturregelung des Frischgas-Abgas-Gemischs grundsätzlich gleich wie bei der Ausführungsform gemäß Fig. 1. Die hier gezeigte Variante unterscheidet sich von derjenigen der Fig. 1 jedoch dadurch, dass anstelle eines Rückführventils 23 ein Gebläse 48 im Rückführpfad 16 angeordnet ist. Das Gebläse 48 ist so ausgestaltet, dass damit die rückgeführten Verbrennungsabgase in Richtung Frischgaspfad 13 angetrieben werden können. Das Gebläse 48 ist hier stromab des Rückführkühlers 18 angeordnet und ist über eine entsprechende Steuerleitung 49 mit der Steuereinrichtung 17 gekoppelt. Durch eine entsprechende Betätigung kann mit Hilfe des Gebläses 48 der Volumenstrom der rückgeführten Verbrennungsabgase gesteuert werden. Bei der hier gezeigten Ausführungsform übernimmt das Gebläse 48 somit die Funktion des Rückführventils 23. Dabei ist grundsätzlich auch eine Ausführungsform denkbar, die sowohl ein Gebläse 48 als auch ein Rückführventil 23 aufweist.

Bei der Ausführungsform gemäß Fig. 2 ist der Rückführkühler 18 gleichzeitig so ausgestaltet, dass mit dessen Hilfe das rückgeführte Verbrennungsabgas getrocknet werden kann. Das dabei entstehende Wasser kann entsprechend einem Pfeil 50 abgeführt werden.

### Bezugszeichenliste

- 1: Gasturbinenanlage
- 2: Turbogruppe
- 3: Abgasrückführeinrichtung
- 4: Turbine
- 5: Verdichter
- 6: Brennkammer
- 7: Generator
- 8: Antriebswelle
- 9: Gaspfad
- 10: Auslass von 5
- 11: Einlass von 4
- 12: Einlass von 5
- 13: Frischgaspfad
- 14: Abgaspfad
- 15: Auslass von 4
- 16: Rückführpfad
- 17: Steuereinrichtung
- 18: Rückführkühler
- 19: Steuerleitung
- 20: Temperatursensor
- 21: Signalleitung
- 22: Einleitstelle
- 23: Rückführventil
- 24: Steuerleitung
- 25: Strömungssensor
- 26: Signalleitung
- 27: Dampferzeuger
- 28: Abzweigstelle
- 29: Abgaskühler
- 30: abgetrenntes Wasser
- 31: CO₂-Trenneinrichtung
- 32: abgetrenntes CO₂
- 33: Einrichtung
- 34: Umgebung
- 35: abgetrennter N₂
- 36: Hochdruckturbine
- 37: Niederdruckturbine
- 38: Hochdruckverdichter
- 39: Niederdruckverdichter
- 40: Hochdruckbrennkammer
- 41: Niederdruckbrennkammer
- 42: erster Gaspfad
- 43: zweiter Gaspfad
- 44: erster Kühler
- 45: erster Kühlgaspfad
- 46: zweiter Kühler
- 47: zweiter Kühlgaspfad
- 48: Gebläse
- 49: Steuerleitung
- 50: abgetrenntes Wasser

## Patentansprüche

1. Gasturbinenanlage, insbesondere in einem Kraftwerk zur Stromgewinnung,
- mit wenigstens einer Turbogruppe (2), die wenigstens eine Turbine (4; 36, 37), wenigstens einen damit antriebsgekoppelten Verdichter (5; 38, 39) und zumindest einer in einem den Verdichter (5; 38, 39) mit der Turbine (4; 36, 37) verbindenden Gaspfad (9; 42, 43) angeordneten Brennkammer (6; 40, 41),
- mit wenigstens einer Abgasrückführeinrichtung (3), die im Betrieb der Gasturbinenanlage (1) Verbrennungsabgas der Turbine (4; 37) von einem mit der Turbine (4; 37) verbundenen Abgaspfad (14) über einen Rückführpfad (16) zu einem mit dem Verdichter (5; 39) verbundenen Frischgaspfad (13) führt,
- mit einer Steuereinrichtung (17), welche einen Volumenstrom und/oder eine Temperatur der rückgeführten Verbrennungsabgase so regelt, dass ein in den Verdichter (5; 39) eintretendes Frischgas-Abgas-Gemisch eine vorbestimmte Soll-Temperatur aufweist, wobei im Rückführpfad (16) ein Rückführventil (23) angeordnet ist, mit dessen Hilfe der Volumenstrom der rückgeführten Verbrennungsabgase steuerbar ist, und das mit der Steuereinrichtung (17) gekoppelt ist,
**dadurch gekennzeichnet,**
**dass** im Rückführpfad (16) stromabwärts des Rückführventils (23) ein Rückführkühler (18) zum Kühlen der rückgeführten Verbrennungsabgase angeordnet ist, der hinsichtlich seiner Kühlleistung steuerbar ist und der mit der Steuereinrichtung (17) gekoppelt ist.

2. Gasturbinenanlage nach Anspruch 1,
**dadurch gekennzeichnet,**
**dass** der Rückführkühler (18) so ausgestaltet ist, dass damit das rückgeführte Verbrennungsabgas auf eine Temperatur abkühlbar ist, die unterhalb einer Umgebungstemperatur der Gasturbinenanlage (1) liegt.

3. Gasturbinenanlage nach Anspruch 1 oder 2,
**dadurch gekennzeichnet,**
**dass** der Rückführkühler (18) als Wasser-Sprüh-Kühler ausgestaltet ist, der zum Kühlen der rückgeführten Verbrennungsabgase Wasser in die rückgeführten Verbrennungsabgase einsprüht.

4. Gasturbinenanlage nach einem der Ansprüche 1 bis 3,
**dadurch gekennzeichnet,**
- **dass** im Frischgaspfad (13) zumindest ein mit der Steuereinrichtung (17) gekoppelter Temperatursensor (20) stromab oder stromauf einer Einleitstelle (22) angeordnet ist, an welcher der Rückführpfad (16) in den Frischgaspfad (13) einmündet, und/oder
- **dass** im Rückführpfad (16) zumindest ein mit der Steuereinrichtung (17) gekoppelter Temperatursensor stromab oder stromauf eines Rückführkühlers (18) zum Kühlen der rückgeführten Verbrennungsabgase angeordnet ist, und/oder
- **dass** im Rückführpfad (16) zumindest ein mit der Steuereinrichtung (17) gekoppelter Strömungssensor (25) angeordnet ist.

5. Gasturbinenanlage nach einem der Ansprüche 1 bis 4,
**dadurch gekennzeichnet,**
- **dass** im Abgaspfad (14) ein Dampferzeuger (27) zur Wärmerückgewinnung angeordnet ist,
- **dass** der Rückführpfad (16) stromab des Dampferzeugers (27) vom Abgaspfad (14) abzweigt.

6. Gasturbinenanlage nach Anspruch 5,
**dadurch gekennzeichnet,**
- **dass** im Abgaspfad (14) stromab des Dampferzeugers (27) ein Abgaskühler (29) angeordnet ist,
- **dass** der Rückführpfad (16) stromab oder stromauf des Abgaskühlers (29) vom Abgaspfad (14) abzweigt.

7. Gasturbinenanlage nach einem der Ansprüche 1 bis 6,
**dadurch gekennzeichnet,**
- **dass** im Abgaspfad (14) eine Kohlendioxid-Trenneinrichtung (31) zum Entfernen von Kohlendioxid aus dem Verbrennungsabgas angeordnet ist,
- **dass** der Rückführpfad (16) stromauf oder stromab der Kohlendioxid-Trenneinrichtung (31) vom Abgaspfad (14) abzweigt.

8. Gasturbinenanlage nach einem der Ansprüche 1 bis 7,
**dadurch gekennzeichnet,**
**dass** der Verdichter (5; 38, 39) mit einer Vernebelungseinrichtung ausgestattet ist, die Wassertröpfchen in das Frischgas-Abgas-Gemisch eindüst.

9. Gasturbinenanlage nach einem der Ansprüche 1 bis 8,
**dadurch gekennzeichnet,**
**dass** im Rückführpfad (16) ein Gebläse (48) zum Antreiben der rückgeführten Verbrennungsabgase in Richtung Frischgaspfad (13) angeordnet ist, das mit der Steuereinrichtung (17) gekoppelt ist.

10. Gasturbinenanlage nach einem der Ansprüche 1 bis 9,
**dadurch gekennzeichnet,**
**dass** im Frischgaspfad (13) eine Einrichtung (33) zum Anreichern des Sauerstoffgehalts im Frischgas angeordnet ist.

11. Gasturbinenanlage nach einem der Ansprüche 1 bis 10,
**dadurch gekennzeichnet,**
**dass** die Steuereinrichtung (17) die Soll-Temperatur auf +/- 5 K genau einregelt.

12. Gasturbinenanlage nach einem der Ansprüche 1 bis 11,.
**dadurch gekennzeichnet,**
**dass** die Abgasrückführeinrichtung (3) eine Entfeuchtungseinrichtung aufweist, die im Rückführpfad (16) stromauf oder stromab eines Rückführkühlers (18) zum Kühlen der rückgeführten Verbrennungsabgase angeordnet ist.

## Claims

1. Gas turbine plant, in particular in a power station for electricity generation, with
- at least one turbo group (2) comprising at least one turbine (4; 36, 37), at least one compressor (5; 38, 39) coupled for drive purposes thereto, and at least one combustion chamber (6; 40, 41) arranged in a gas path (9; 42, 43) which connects the compressor (5; 38, 39) to the turbine (4; 36, 37),
- at least one exhaust gas recirculation device (3) which, in operation of the gas turbine plant (1), conducts combustion exhaust gas of the turbine (4; 37) from an exhaust gas path (14) connected to the turbine (4; 37) to a fresh gas path (13) that is connected to the compressor (5; 39) via a recirculation path (16),
- a control device (17) which controls the volume flow and/or temperature of the recirculated combustion exhaust gas such that a fresh gas-exhaust gas mixture entering the compressor (5; 39) has a predetermined reference temperature, wherein a recirculation valve (23) is arranged in the recirculation path (16), via which valve the volume flow of the recirculated combustion exhaust gas can be controlled and which is coupled to the control device (17),
**characterised in that**
a recirculation cooler (18), the cooling power of which can be controlled by and which is coupled to the control device (17), is arranged in the recirculation path (16) downstream of the recirculation valve (23) for cooling the recirculated combustion exhaust gas.

2. Gas turbine plant according to claim 1, **characterised in that** the recirculation cooler (18) is configured such that it can cool the recirculated combustion exhaust gas to a temperature which lies below ambient temperature of the gas turbine plant (1).

3. Gas turbine plant according to claim 1 or 2, **characterised in that** the recirculation cooler (18) is configured as a water spray cooler which sprays water into the recirculated combustion exhaust gas in order to cool the recirculated combustion exhaust gas.

4. Gas turbine plant according to any of claims 1 to 3, **characterised in that**
- at least one temperature sensor (20) coupled to the control device (17) is arranged in the fresh gas path (13) downstream or upstream of an introduction point (22) at which the recirculation path (16) opens into the fresh gas path (13), and/or
- at least one temperature sensor coupled to the control device (17) is arranged in the recirculation path (16) downstream or upstream of a recirculation cooler (18) for cooling the recirculated combustion exhaust gas, and/or
- at least one flow sensor (25) coupled to the control device (17) is arranged in the recirculation path (16).

5. Gas turbine plant according to any of claims 1 to 4, **characterised in that**
- a steam generator (27) for heat recovery is arranged in the exhaust gas path (14),
- the recirculation path (16) branches off the exhaust gas path (14) downstream of the steam generator (27).

6. Gas turbine plant according to claim 5, **characterised in that**
- an exhaust gas cooler (29) is arranged in the exhaust gas path (14) downstream of the steam generator (27),
- the recirculation path (16) branches off the exhaust gas path (14) downstream or upstream of the exhaust gas cooler (29).

7. Gas turbine plant according to any of claims 1 to 6, **characterised in that**
- a carbon dioxide separating device (31) for removing carbon dioxide from the combustion exhaust gas is arranged in the exhaust gas path (14),
- the recirculation path (16) branches off the exhaust gas path (14) upstream or downstream of the carbon dioxide separating device (31).

8. Gas turbine plant according to any of claims 1 to 7, **characterised in that** the compressor (5; 38, 39) is equipped with an atomising device which injects water droplets into the fresh gas-exhaust gas mixture.

9. Gas turbine plant according to any of claims 1 to 8, **characterised in that** a fan (48) which is coupled to the control device (17) is arranged in the recirculation path (16) for driving the recirculated combustion exhaust gas towards the fresh gas path (13).

10. Gas turbine plant according to any of claims 1 to 9, **characterised in that** a device (33) for enriching the oxygen content in the fresh gas is arranged in the fresh gas path (13).

11. Gas turbine plant according to any of claims 1 to 10, **characterised in that** the control device (17) regulates the reference temperature to an accuracy of +/- 5 K.

12. Gas turbine plant according to any of claims 1 to 11, **characterised in that** the exhaust gas recirculation device (3) has a dehumidifier device which is arranged in the recirculation path (16) upstream or downstream of a recirculation cooler (18) for cooling the recirculated combustion exhaust gas.

## Revendications

1. Installation de turbine à gaz, plus particulièrement dans une centrale énergétique pour la production de courant,
- avec au moins un groupe turbo (2) qui comprend au moins une turbine (4 ; 36, 37), au moins un compresseur (5 ; 38 ; 39) couplé en entraînement avec celle-ci et au moins une chambre de combustion (6 ; 40, 41) disposée dans un passage de gaz (9 ; 42, 43) reliant le compresseur (5 ; 38, 39) avec la turbine (4 ; 36, 37),
- avec au moins un dispositif de retour de gaz d'échappement (3) qui, pendant le fonctionnement de l'installation de turbine à gaz (1), conduit le gaz d'échappement de combustion de la turbine (4 ; 37) d'un passage de gaz d'échappement (14) relié avec la turbine (4 ; 37,) par l'intermédiaire d'un passage de retour (16), vers un passage de gaz frais (13) relié avec le compresseur (5 ; 39),
- avec un dispositif de commande (17) qui régule un débit volumique et/ou une température des gaz d'échappement de combustion remis en circulation de façon à ce qu'un mélange gaz d'échappement - gaz frais entrant dans le compresseur (5 ; 39) présente une température de consigne prédéterminée, dans lequel, dans le passage de retour (16), est disposée une soupape de retour (23),
à l'aide de laquelle le débit volumique des gaz d'échappement de combustion peut être contrôlé et qui est couplée avec le dispositif de commande (17),
**caractérisée en ce que**
dans le passage de retour (16), en aval de la soupape de retour (23) est disposée un refroidisseur de retour (18) pour le refroidissement des gaz d'échappement remis en circulation, qui peut être contrôlé en ce qui concerne sa puissance de refroidissement et qui est couplé avec le dispositif de commande (17).

2. Installation de turbine à gaz selon la revendication 1,
**caractérisée en ce que**
le refroidisseur de retour (18) est conçu de façon à ce que le gaz d'échappement de combustion puisse être refroidi à une température qui se trouve en dessous d'une température ambiante de l'installation de turbine à gaz (1).

3. Installation de turbine à gaz selon la revendication 1 ou 2,
**caractérisée en ce que**
le refroidisseur de retour (18) est conçu comme un refroidisseur à pulvérisation d'eau qui, pour le refroidissement des gaz d'échappement de combustion remis en circulation, pulvérise de l'eau dans les gaz d'échappement de combustion remis en circulation.

4. Installation de turbine à gaz selon l'une des revendications 1 à 3,
**caractérisée en ce que**
- dans le passage de gaz frais (13) est disposé au moins un capteur de température (20) couplé avec le dispositif de commande (17), en aval ou en amont d'un point d'entrée (22) au niveau duquel le passage de retour (16) débouche dans le passage de gaz frais (13) et/ou
- dans le passage de retour (16), est disposé au moins un capteur de température couplé avec le dispositif de commande (17), en aval ou en amont d'un refroidisseur de retour (18) pour le refroidissement des gaz d'échappement de combustion et/ou
- dans le passage de retour (16) est disposé au moins un capteur d'écoulement (25) couplé avec le dispositif de commande (17).

5. Installation de turbine à gaz selon l'une des revendications 1 à 4,
**caractérisée en ce que**
- dans le passage de gaz d'échappement (14) est disposé un générateur de vapeur (27) pour l'extraction de chaleur,
- le passage de retour (16) bifurque du passage de gaz d'échappement (14) en aval du générateur de vapeur (27).

6. Installation de turbine à gaz selon la revendication 5,
**caractérisée en ce que**
- dans le passage de gaz d'échappement (14), en aval du générateur de vapeur (27), est disposé un refroidisseur de gaz d'échappement (29),
- le passage de retour (16) bifurque du passage de gaz d'échappement (14) en amont du passage de gaz d'échappement (14).

7. Installation de turbine à gaz selon l'une des revendications 1 à 6,
**caractérisée en ce que**
- dans le passage de gaz d'échappement (14) est disposé un dispositif de séparation de dioxyde de carbone (31) pour l'élimination du dioxyde de carbone dans le gaz d'échappement de combustion,
- le passage de retour (16) bifurque du passage de gaz d'échappement (14) en amont ou en aval du dispositif de séparation de dioxyde de carbone (31).

8. Installation de turbine à gaz selon l'une des revendications 1 à 7,
**caractérisée en ce que**
le compresseur (5 ; 38, 39) est muni d'un dispositif de nébulisation qui introduit des gouttelettes d'eau dans le mélange gaz frais - gaz d'échappement.

9. Installation de turbine à gaz selon l'une des revendications 1 à 8,
**caractérisée en ce que**
dans le passage de retour (16), est disposé un ventilateur (48) pour l'entraînement des gaz d'échappement de combustion remis en circulation en direction du passage de gaz frais (13), qui est couplé avec le dispositif de commande (17).

10. Installation de turbine à gaz selon l'une des revendications 1 à 9,
**caractérisée en ce que**
dans le passage de gaz frais (13) est disposé un dispositif (33) pour l'augmentation de la teneur en oxygène dans le gaz frais.

11. Installation de turbine à gaz selon l'une des revendications 1 à 10,
**caractérisée en ce que**
le dispositif de commande (17) régule la température de consigne à ± 5 K.

12. Installation de turbine à gaz selon l'une des revendications 1 à 11,
**caractérisée en ce que**
le dispositif de retour de gaz d'échappement (3) comprend un dispositif de déshumidification qui est disposé dans le passage de retour (16) en amont ou en aval d'un refroidisseur de retour (18) pour le refroidissement des gaz d'échappement de combustion remis en circulation.
